(19) Europäisches Patentamt
European Patent Office
Office européen des brevets

(11) **EP 3 372 905 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(51) Int Cl.:
*F24D 19/10* (2006.01)          *G05D 23/00* (2006.01)

(21) Anmeldenummer: **18158511.8**

(22) Anmeldetag: **26.02.2018**

(54) **VERFAHREN ZUM BETREIBEN EINES GEBÄUDEKLIMATISIERUNGSSYSTEMS MIT EINER VIELZAHL VON WÄRMETAUSCHERN IN EINEM DYNAMISCH HYDRAULISCH ABGEGLICHENEN ZUSTAND**

METHOD FOR OPERATING A BUILDING AIR CONDITIONING SYSTEM WITH A PLURALITY OF HEAT EXCHANGERS IN A DYNAMICALLY HYDRAULICALLY BALANCED STATE

PROCÉDÉ DE FONCTIONNEMENT D'UN SYSTÈME DE CLIMATISATION DE BÂTIMENTS À UNE PLURALITÉ D'ÉCHANGEURS THERMIQUES DANS UN ÉTAT D'ÉQUILIBRE HYDRAULIQUE ET DYNAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2017 DE 102017104286**

(43) Veröffentlichungstag der Anmeldung:
**12.09.2018 Patentblatt 2018/37**

(73) Patentinhaber: **Robert Bosch GmbH**
**70442 Stuttgart (DE)**

(72) Erfinder:
• **Kloster, Daniel**
**48712 Gescher (DE)**
• **Horstmann, Manfred**
**48432 Rheine (DE)**

(74) Vertreter: **Wickord, Wiro**
**Tarvenkorn & Wickord Patentanwälte**
**Partnerschaftsgesellschaft mbB**
**Rathenaustraße 96**
**33102 Paderborn (DE)**

(56) Entgegenhaltungen:
EP-A2- 1 936 288          DE-A1-102012 018 778
DE-A1-102014 016 791      JP-A- 2012 154 550

**Beschreibung**

Die Erfindung betrifft ein Verfahren zum Betreiben eines Gebäudeklimatisierungssystems mit einer Vielzahl von Wärmetauschern einem dynamisch hydraulisch abgeglichenen Zustand mit den Merkmalen des Oberbegriffs des Anspruchs 1.

Durch ein solches Verfahren wird innerhalb eines Gebäudeklimatisierungssystems, insbesondere einer Heizungsanlage jeder Heizkörper oder Heizkreis oder sonstiger Wärmetauscher auf einen bestimmten Durchfluss des flüssigen Wärmeträgermediums eingestellt, wobei es sich meist um warmes Wasser handelt. Damit soll erreicht werden, dass bei einer bestimmten Vorlauftemperatur jeder Raum genau mit der Wärmemenge versorgt wird, die benötigt wird, um die gewünschte Raumtemperatur zu erreichen und dass der Rücklauf jedes Heizkörpers die gleiche Temperatur aufweist. Fehlt der hydraulische Abgleich, so werden Heizkörper, die nahe zur Wärmequelle stehen, besser versorgt, während weiter entfernte Heizkörper, beispielsweise in oberen Stockwerken, nicht warm werden. Bei einem Leitungsnetz ohne hydraulischen Abgleich wird der einer Wärmequelle wie einem Heizkessel, einem Kaltwassersatz, einem Pufferspeicher oder einem (Fernwärme-)Wärmetauscher am nächsten gelegene Heizkörper mit dem geringsten Strömungswiderstand erreicht; er wird eher und leichter durchflossen und sein Rücklaufwasser verlässt den Heizkörper mit vergleichsweise hoher Temperatur. Der geringere Durchflusswiderstand führt dazu, dass durch diesen Heizkörper mehr warmes Wasser fließt als benötigt. Der Heizungsrücklauf zum Warmwassererzeuger besteht zu einem Großteil aus dem Rücklauf des ersten Heizkörpers und seine Temperatur ist dadurch höher als bei einer gleichmäßigeren Verteilung. Wird der Heizungsrücklauf zu heiß, so entstehen zumindest unnötige thermische Verluste im Leitungsnetz. Bei einer einfach gebauten Heizungsregelung kann die Pumpe für die Wärmezufuhr oder der Brenner des Heizkessels abschalten, so dass weiter entfernt gelegene Heizkörper nicht beheizt werden. Meist werden dann als Abhilfe die Leistung der Heizungswasser-Umwälzpumpe und/oder die Vorlauftemperatur erhöht. Das löst das Problem der schlecht erwärmten Heizkörper zwar, aber heißes Wasser aus dem ersten Heizkörper fließt dann noch schneller oder noch heißer zurück und führt zu noch mehr Brennerstopps, Auskühlen des Brenners mit Wärmeverlust bis zum Wiedereinschalten ("Takten") des Brenners.

Es sind verschiedene Ansätze bekannt, um dem entgegen zu wirken. Im einfachsten Fall wird durch Drosselelemente an jedem Heizkreis beziehungsweise Heizkörper der Fließwiderstand individuell eingestellt, so dass in den Heizkreisen mit den langen Leitungslängen und weiter entfernten Heizkörpern ein geringer Fließwiderstand eingestellt wird, wohingegen der Durchfluss an den Heizkörpern nahe beim Wärmeerzeuger künstlich reduziert wird. Der Nachteil besteht darin, dass eine Einstellung manuell an jedem einzelnen Heizkörper vorgenommen werden muss, zum Beispiel über die Rücklaufverschraubung, und dies unter Umständen in mehreren Durchläufen, weil sich die Einstellungen an der Vielzahl von Heizkörpern naturgemäß gegenseitig beeinflussen. Zudem ist der so vorgenommene hydraulische Abgleich rein statisch und gilt immer nur für einen bestimmten Betriebspunkt. Schon bei witterungsbedingten Änderungen des Betriebspunktes liegt kein hydraulisch optimiertes System mehr vor, und auch der Komponententausch in einem separat versorgten Abschnitt, im Folgenden Masche genannt, führt zu Änderungen der Strömungsverhältnisse.

Aus der DE 10 2014 016 791 A1 sind eine Heizungsanlage und ein Verfahren zu einem solchen statischen hydraulischen Abgleich einer Heizungsanlage bekannt. Die Heizungsanlage besitzt einen Volumenstrommesser im Vorlauf und einen Differenzdrucksensor, der zwischen Vorlauf und Rücklauf positioniert ist. Der Heizkörper, bei dem die schlechteste Versorgung zu erwarten ist, wird zur Messung herangezogen, während alle anderen Heizkörper von der Heizungsanlage temporär abgetrennt werden müssen, was sehr zeitraubend ist. Dadurch wird eine Druckdifferenz ermittelt. Anschließend werden sukzessive alle anderen Heizkörper einzeln mit der Heizungsanlage verbunden und es wird an diesem jeweiligen Heizkörper dieselbe Druckdifferenz eingestellt.

In der DE 10 2010 022 763 A1 wird ein Verfahren vorgestellt, mit dem ein permanenter, dynamischer Abgleich in einer Heizungsanlage erfolgen soll. Hierzu wird ein Regelsystem installiert, das pro Kreislaufstrang regelbare Stellventile und Differenzdrucksensoren vorsieht. Ein Kreislaufstrang umfasst aber mehrere parallel geschaltete Heizkörper, die für sich nicht individuell beeinflusst werden, so dass in der Gesamttopologie einer größere Anlage Verbesserungen erzielt werden, aber nicht bei einer Vielzahl verstreut angeordneter Heizkörper, wie es für Wohngebäude typisch ist.

In dem Patent DE 10 2012 018 778 B4 ist ein Verfahren zum Betrieb einer Heizungsanlage unter Schutz gestellt, das eine Anlernphase vorsieht, während derer eine geeignete Begrenzung der Ventilhübe der Heizkörperventile ermittelt und gespeichert wird. Damit ist es möglich, während einer nachfolgenden Aufheizphase die Ventilstellungen so begrenzen, dass bei dem hydraulisch ungünstigsten Ventil in der Anlage eine maximale Ventilstellung eingenommen wird und dass alle Heizkörper gleichmäßig versorgt werden. Damit wird die ausreichende Wärmeversorgung des ungünstigsten Punktes gewährleistet, während die hydraulisch besser versorgten Ventile gedrosselt werden, um einen übermäßigen Volumenstrom in diesen Bereichen zu verhindern. Es handelt sich um ein Regelungsverfahren, bei dem die Volumenströme in jeder einzelnen Masche, also beispielsweise in einem Heizkörper mit den zugehörigen Leitungen und Ventilen in Abhängigkeit von der in der Nähe des Heizkörpers gemessenen Raumtemperatur geregelt wird. Die Fließwiderstände im Rohrnetz werden allerdings dabei nicht berücksichtigt, so dass maschenweise sehr unterschiedliche Strömungsgeschwindigkeiten auftreten können.

**EP 3 372 905 B1**

Die Aufgabe der vorliegenden Erfindung besteht somit darin, ein Verfahren der eingangs genannten Art so weiter zu entwickeln, dass ein dynamischer hydraulischer Abgleich erreicht wird, ohne dass dabei eine Raumtemperaturregelung erforderlich ist.

Eine Lösung wird nach der vorliegenden Erfindung durch ein Verfahren mit den Merkmalen des Anspruchs 1 bereitgestellt.

Demnach sieht die Erfindung ein Verfahren zum Betreiben eines Gebäudeklimatisierungs-systems in einer Warmwasserheizungsinstallation vor, wobei es sich insbesondere um ein Verfahren zum Betreiben einer Heizungsanlage handelt. Erfindungsgemäß können durch eine fortwährende rechnerische Ermittlung aller relevanten hydraulischen Parameter in dem Rohrleitungsnetz die Volumenströme aller Maschen sowie der sonstigen Teil- und Zwischenabschnitte der Verrohrung rechnerisch beherrscht werden, wobei auch gegenseitige Abhängigkeiten berücksichtigt werden können, ohne dass eine Raumtemperaturregelung oder -erfassung erforderlich ist.

Aufgrund der erfindungsgemäß erlangten Kenntnis über die hydraulischen Eigenschaften des Rohrleitungsnetzes kann jede Ventilstellung vorausberechnet und im Voraus eingestellt werden, ohne dass die Raumtemperatur dafür herangezogen werden muss.

Mit "Heizungsanlage" wird in der folgenden Beschreibung des erfindungsgemäßen Verfahrens Bezug auf den häufigsten Anwendungsfall für das Verfahren nach der Erfindung genommen. Die Erfindung bezieht sich aber ausdrücklich auch auf eine Anlage zur Gebäudekühlung, mitunter sogar in derselben Heizungsanlage, die dann lediglich mit einem gekühlten Wärmeträgermedium betrieben wird. Ebenso können die in der folgenden Verfahrensbeschreibung genannten Heizkörper auch Wärmetauscher anderer Art sein wie beispielsweise Heizschlangen von Fußbodenheizungen oder temperierbare Deckenelemente. Das Verfahren nach der Erfindung ist also nicht auf eine bestimmte Temperatur des Wärmeträgers beschränkt, sondern lediglich auf einen flüssigen, inkompressiblen Wärmeträger.

Die Stellgrößen sind nach der Erfindung die Ventilstellungen am Heizkörper oder an einem sonstigen Wärmeverbraucher in der einzelnen Masche und die Drehzahl der Umwälzpumpe. Die übliche Heizungsregelung im Sinne einer außen- und oder innentemperaturabhängigen Regelung von Brenner erfolgt insbesondere außerhalb des erfindungsgemäßen Verfahrens beziehungsweise außerhalb einer zur Umsetzung des erfindungsgemäßen Verfahrens vorgesehenen Steuerungseinrichtung. Das heißt, das erfindungsgemäße Verfahren ersetzt die Heizungsregelung nicht notwendigerweise, sondern ergänzt sie hinsichtlich der Optimierung der Volumenströme im System.

Es ist möglich, eine an sich bekannte temperaturbasierte Regelung mit dem erfindungsgemäßen Heizungssteuerungsverfahren zu kombinieren. Das heißt, dass erfindungsgemäß Raumtemperaturregelungen in einzelnen oder mehreren Räumen möglich sein können, aber nicht notwendig sind. Die alleinige Stellgröße nach der Erfindung ist die jeweilige Heizkörper-Ventilstellung, welche gesteuert, aber nicht notwendigerweise geregelt wird.

Möglich ist, in einer gemeinsamen Steuerungs- und Regelungseinrichtung die herkömmlichen Komponenten zur Innen- und Außentemperaturerfassung sowie zur Brenner- und Pumpensteuerung mit einer elektronischen Steuerungseinrichtung zusammenzufassen, die zur Durchführung des erfindungsgemäßen Verfahrens geeignet ist. Dabei handelt es sich vorzugsweise um eine speicherprogrammierbare Steuerung, die über ein Bussystem mit den übrigen Komponenten kommuniziert, um Sensorwerte aufzunehmen und Ventilstellwerte auszugeben. Außerdem kann ein Modul zur Benutzerinteraktion vorgesehen sein, um Messwerte und Stellgrößen zu visualisieren oder Benutzereingaben abzufragen, beispielsweise für die tolerierbare Fehlergröße, die als Kriterium in das Rechenverfahren einfließt.

Die einzigen realen Messwerte, die in dem erfindungsgemäßen Verfahren und einer dafür geeigneten Steuerungseinrichtung verarbeitet werden, stammen nicht aus den einzelnen Maschen, sondern von zwei Sensoren an einer zentralen Stelle, insbesondere in unmittelbarer Nähe zur Umwälzpumpe und/oder zum Wärmeerzeuger.

Die Erfindung sieht also vor, durch gezielte Beeinflussung aller Teilvolumenströme in jeder einzelnen Masche exakt die dort benötigte Wärmemenge zur Verfügung zu stellen. Welche Wärmemenge jeweils benötigt wird, wird beispielsweise durch eine Wärmebedarfsermittlung im Voraus festgelegt. Hierzu kann das zusätzliche Heizungsregelungssystem überlagert wirken, welches zum Beispiel in Abhängigkeit von der Außentemperatur die jeweils benötigte Wärmemenge rechnerisch neu berechnet.

Erfindungsgemäß wird zur Bestimmung der zahlreichen unbekannten und sich gegebenenfalls gegenseitig beeinflussenden hydraulischen Variablen ein Verfahren zur linearen Optimierung angewandt, welches ohne Ableitungsfunktionen auskommt und in der Mathematik als NELDER-MEAD-Verfahren bekannt ist. Charakteristisch dafür ist, dass das Verfahren relativ langsam, aber zuverlässig konvergiert, sodass keine große Rechenleistung benötigt wird. Die Rechenleistung kann mit kleinem Bauraum durch eine kostengünstige speicherprogrammierbare Steuerung zur Verfügung gestellt werden. Die Rechenzeitdauer für einen Durchlauf zur Kennwertberechnung und Optimierung, die mitunter 10 bis 15 Minuten betragen kann, ist angesichts des natürlicherweise ohnehin trägen Aufheiz- und Abkühlverhaltens von Räumen in Gebäuden eher als vorteilhaft anzusehen, auf jeden Fall nicht nachteilig.

Zum erstmaligen Betrieb der Heizungsanlage werden die im NELDER-MEAD-Verfahren vorgesehenen Matrizen mit willkürlichen Startwerten geladen, wobei lineare Abhängigkeiten vermieden werden müssen. Es wird zum Beispiel in jeder Matrize eine andere Variable mit dem Wert 1 belegt, während alle anderen Variablen als Null definiert werden. Mit diesen willkürlichen Startwerten wird dann der zu erwartende Gesamtvolumenstrom in der Heizungsanlage, der sich nämlich als Summe der mit den Startwerten berechneten Einzelvolumenströme in allen Maschen ergibt, mit dem tatsächlich über einen Volumenstromsensor in der Heizungsanlage gemessenen Volumenstrom verglichen. Die Abweichung zwischen Ist- und Scheinvolumenstrom wird als Fehler des NELDER-MEAD-Verfahrens definiert. Diese Fehlerberechnung wird für jede Matrize einzeln durchgeführt, und sie wird für jede Matrize auch mehrfach durchgeführt, beispielsweise, wenn sich die Ventilstellung von einem Stellventil innerhalb des Systems gegenüber dem vorhergegangenen Schritt um 10 % geändert hat.

Es werden nach der Erfindung mehrfach für jede Matrize Fehlerberechnungen anhand der Startwerte durchgeführt und die Matrizen werden nach der Größe ihrer Fehlersumme sortiert. Unter Nutzung des mathematischen NELDER-MEAD-Verfahrens zur linearen Optimierung werden die einzelnen Schritte so oft wiederholt, bis die Fehlersumme einer Ergebnismatrize unter einen vorgegebenen Toleranzwert fällt, der zum Beispiel zuvor vom Benutzer festgelegt worden ist. An dieser Stelle wird das iterative Verfahren beendet und die in der zu dem Zeitpunkt vorliegenden Ergebnismatrize enthaltenen Werte werden als gültige Systemparameter zur Ventilsteuerung der Heizkörper oder sonstigen Wärmetauscher herangezogen.

Nach diesem Erstdurchlauf zur Ermittlung der relevanten Verfahrensparameter, die zum Start des Heizungsbetriebs erforderlich sind, kann das beschriebene Optimierungssystem jedoch ständig fortgesetzt werden, ohne dass Nachteile auf den laufenden Heizungsbetrieb zu befürchten sind. Reale Einflüsse können im Betrieb zu Abweichungen führen, beispielsweise defekte Heizkörperventile. Die gegenseitige Beeinflussung der Strömungsparameter verschiebt sich, wenn beispielsweise der Volumenstrom erhöht wird, um einen erhöhten Wärmebedarf aufgrund geänderter Außentemperaturen zu liefern. Durch die fortlaufende Fehlerberechnung und Optimierung wird jede Zustandsänderung erfasst, wenn auch mit einer gewissen Verzögerung. Wie oben bereits beschrieben, ist diese Verzögerung jedoch nicht nachteilig, da eine Gebäudeheizung ohnehin ein träge reagierendes System ist.

Das erfindungsgemäße Heizungssteuerungsverfahren wird unter Bezug auf die Figuren näher erläutert. Die Figuren zeigen in einer schematischen Ansicht:

Figur 1a, 1b     jeweils eine exemplarische Heizungsanlage mit zwei Maschen und

Figur 2a, 2b     jeweils eine Heizungsanlage mit drei Kreislaufsträngen und einer Vielzahl von Heizkörpern.

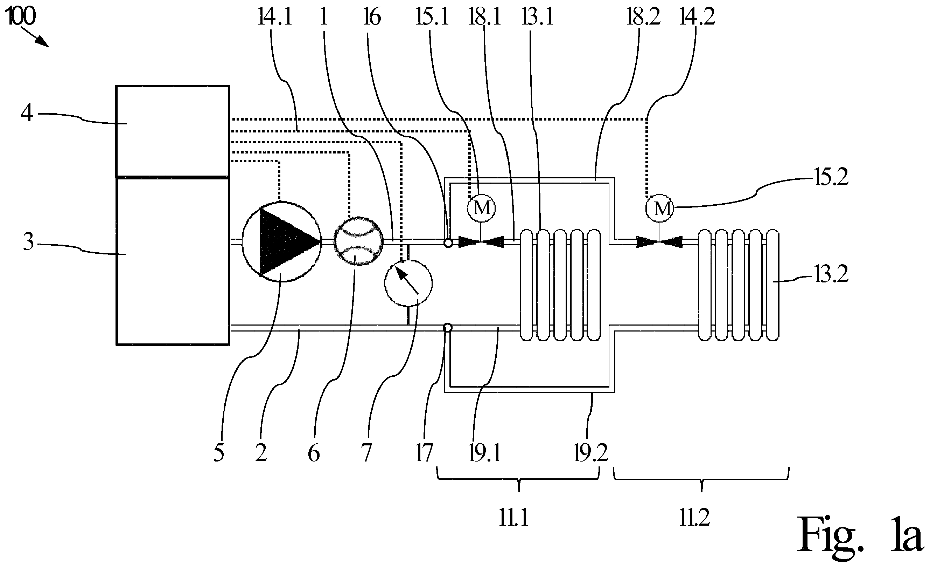

Figur 1a zeigt eine sehr einfache Heizungsanlage 100 mit einer Vorlaufleitung 1 und einer Rücklaufleitung 2, die mit einem Wärmeerzeuger 3 oder einem sonstigen Wärmetauscher verbunden sind. Das Wärmeträgermedium, insbesondere Wasser, wird über eine Umwälzpumpe 5 durch das sich anschließende Rohrleitungsnetz gefördert.

In dem dargestellten, vereinfachten Beispiel sind zwei Maschen 11.1, 11.2 vorgesehen, also zwei parallel geschaltete Subkreisläufe, die je einen Heizkörper 13.1, 13.2 umfassen. An einer Verzweigungsstelle 16 teilt sich die Vorlaufleitung 1 in zwei Nebenvorlaufleitungen 11.1, 11.2 zur Versorgung der beiden Maschen 11.1, 11.2 auf. Diese Leitungen führen jeweils durch ein Heizkörperventil 15.1, 15.2 und einen Heizkörper 13.1, 13.2 zur jeweiligen Nebenrücklaufleitung 12.1, 12.2. An einer Vereinigungsstelle 17 werden die Nebenrücklaufleitungen 12.1, 12.2 der beiden Maschen 11.1, 11.2 wiedervereinigt und mit der Rücklaufleitung 2, welche zum Wärmeerzeuger 3 zurückführt, verbunden.

Ein Volumenstromsensor 6 sowie ein Differenzdrucksensor 7, welcher den Differenzdruck zwischen der Vorlaufleitung 1 und der Rücklaufleitung 2 misst, sind mit einer Steuerungseinheit 4 verbunden. Auch die Heizkörperventile 15.1, 15.2 sind mit der Steuerungseinheit 4 verbunden. Hierzu dienen Datenverbindungen 14.1, 14.2, die kabelgebunden oder kabellos ausgeführt sein können.

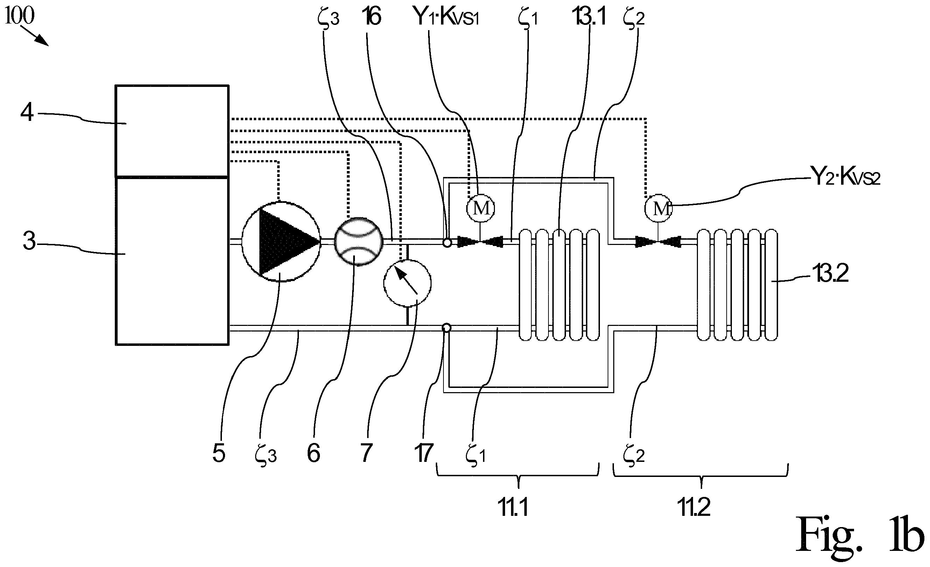

Damit die durch die Heizkörper 13.1, 13.2 führenden Volumenströme, die zur Abgabe der für den jeweiligen Raum gewünschten Wärmemenge führen, über die Stellventile 15.1, 15.2 eingestellt werden können, sind Definitionen erforderlich, die unter Bezug auf Figur 1b beschrieben werden; Figur 1b zeigt dieselbe Heizungsanlage wie Figur 1a, jedoch mit den Variablen, die hydraulische Parameter darstellen und die durch das erfindungsgemäße Verfahren rechnerisch ermittelt werden müssen.

Jeder Masche 11.1, 11.2 ist ein individueller Leitungswiderstand $\zeta_i$ zugeordnet. Leitungsabschnitten von Vor- und Rücklaufleitung 1, 2 oder auch von davon abgehenden Leitungen eines größeren Strangs, werden - sofern sie aufgrund der Volumenkonstanz bei Wasser als Wärmeträger gleiche Volumenströme haben, rechnerisch als Einheit betrachtet und werden ebenfalls durch einen individuellen Leitungswiderstand $\zeta_i$ gekennzeichnet. Im Einzelnen werden folgende Definitionen vorgenommen:

- Einer ersten Masche mit den Nebenvor- und -rücklaufleitungen 11.1, 12.1, dem Heizkörper 13.1 und dem Stellventil 15.1 wird der Leitungswiderstand $\zeta 1$ zugeordnet.

- Die zweite Masche umfasst die Leitungsabschnitte 11.2, 12.2, den Heizkörper 13.2 und das Ventil 15.2. Ihr wird der Leitungswiderstand $\zeta_2$ zugeordnet.

- Dem Basiskreislauf, welcher von der Rücklaufleitung 2 durch den Wärmeerzeuger 3 über die Umwälzpumpe 5 und den Volumenstromsensor 6 in die Vorlaufleitung 1 führt, wird der Leitungswiderstand $\zeta_3$ zugeordnet.

Die in Figur 1a und Figur 1b dargestellte, sehr einfache Heizungsanlage 100 umfasst somit mit dem Basiskreislauf insgesamt drei Maschen. Als weitere Variablen sind die Durchflusskoeffizenten der Stellventile 15.1, 15.2 zu berücksichtigen. Diese werden als $Kvs_1$ und $Kvs_2$ bezeichnet. Zusammen mit der jeweiligen Ventilstellung $Y_1$, $Y_2$, die als normierter Wert zum Beispiel zwischen 0 und 10V oder zwischen 0 und 100% liegen kann, wird der über die Steuerungseinrichtung 4 beeinflussbare Strömungswiderstand charakterisiert.

Der erfindungsgemäß genutzte Algorithmus soll anhand der einfachen Heizungsanlage 100 gemäß Figur 1b nachstehend beschrieben werden:

Zunächst wird eine Gleichung beziehungsweise Funktion ermittelt, welche das hydraulische Verhalten der Anlage beschreibt. Für eine Parallelschaltung von hydraulischen Leitungswiderständen gilt folgende Beziehung:

$$K_{V,result} = K_{V1} + K_{V2}$$

Für eine sequentielle Schaltung von Leitungswiderständen gilt folgende Beziehung:

$$K_{V,result} = \sqrt{\left( \frac{1}{\frac{1}{KV1^2} + \frac{1}{KV2^2}} \right)}$$

Zur einfacheren Schreibweise soll die obige Gleichung mit Hilfe des Operators R wie folgt geschrieben werden:

$$K_{Vresult} = R(K_{V1}, K_{V2})$$

Der hydraulische Ersatzwiderstand aus den Leitungswiderständen $\zeta_2$ und $Y_2{*}K_{VS2}$ wäre dann:

$$K_{Vresult} = R(\zeta_2 , Y_2 \cdot K_{VS2})$$

Der hydraulische Gesamtwiderstand der oben gezeigten Anlage könnte dann wie folgt beschrieben werden:

$$\zeta_{gesamt} = R(\zeta_3 , (R(Y_1 \cdot K_{VS1}, \zeta_1) + R(Y_2 \cdot K_{VS2}, \zeta_2)))$$

Damit lässt sich der Volumenstrom in Abhängigkeit vom Druck berechnen:

$$\dot{V} = \zeta gesamt \cdot \sqrt{\frac{\Delta p}{\varrho}}; \rho = \text{Dichte des Wassers}$$

$$\dot{V}, = R(\zeta_3 , (R(Y_1 \cdot K_{VS1}, \zeta_1) + R(Y_2 \cdot K_{VS2}, \zeta_2))) \cdot \sqrt{\frac{\Delta p}{\varrho}}$$

Für den hydraulischen Abgleich sind folgende reale Werte in der Heizungsanlage bekannt:

- der Volumenstrom $\dot{V}$,
- der Differenzdruck $\Delta p$ und
- die Ventilstellungen $Y_1$ und $Y_2$.

Die Ventilstellungen Yi werden von der Steuerungseinheit 4 vorgegeben und sind damit bekannt. Der tatsäch-

liche momentane Volumenstrom $\dot{V}$ und der tatsächliche momentane Differenzdruck $\Delta p$ werden mittels der Sensoren 6, 7 gemessen. Für den hydraulischen Abgleich sollen nun aus einer Vielzahl von unterschiedlichen Konstellationen von $Y_i$, $\dot{V}$ und $\Delta p$ die Werte für $\zeta_i$ und $K_{VSi}$ berechnet werden. Durch das erfindungsgemäße Verfahren werden also im laufenden Betrieb der Heizungsanlage z. B. 100 Werte für alle fünf Unbekannten $\zeta_1$, $\zeta_2$, $\zeta_3$, $K_{VS1}$ und $K_{VS2}$ ermittelt.

Zur iterativen Berechnung werden nun fünf gleichartige Matrizen mit je einer Zeile und fünf Spalten gebildet:

$$M_1 = [\zeta_1 \ \zeta_2 \ \zeta_3 \ K_{VS1} \ K_{VS2}]$$

$$M_2 = [\zeta_1 \ \zeta_2 \ \zeta_3 \ K_{VS1} \ K_{VS2}]$$

$$M_3 = [\zeta_1 \ \zeta_2 \ \zeta_3 \ K_{VS1} \ K_{VS2}]$$

$$M_4 = [\zeta_1 \ \zeta_2 \ \zeta_3 \ K_{VS1} \ K_{VS2}]$$

$$M_5 = [\zeta_1 \ \zeta_2 \ \zeta_3 \ K_{VS1} \ K_{VS2}]$$

Zu Beginn der Iteration werden alle Matrizen mit willkürlichen Werten geladen, wobei keine lineare Abhängigkeit zwischen den Matrizen entstehen darf, zum Beispiel:

$$M_1 = [1 \ 0 \ 0 \ 0 \ 0]$$

$$M_2 = [0 \ 1 \ 0 \ 0 \ 0]$$

$$M_3 = [0 \ 0 \ 1 \ 0 \ 0]$$

$$M_4 = [0 \ 0 \ 0 \ 1 \ 0]$$

$$M_5 = [0 \ 0 \ 0 \ 0 \ 1]$$

Im ersten Schritt der Iteration wird für jede Matrize die Fehlersumme ermittelt, die sich aus den Werten ihrer aktuellen Elemente, eingesetzt in die Gleichung für den Volumenstrom $\dot{V}_{IST}$, ergibt. Der einzelne Fehler F ist der Betrag der Differenz aus dem gemessenen und berechneten Wert.

$$F = |\ \dot{V}_{IST} - R(\zeta_3\ , (R(Y_1 * K_{VS1}, \zeta_3) + R(Y_2 * K_{VS2}, \zeta_2))) \cdot \sqrt{\frac{\Delta p}{\varrho}}\ |$$

Für die Matrize $M_1$ beispielsweise werden die Fehler für jede zuvor gemessene Konstellation von $Y_1$, $Y_2$, $\dot{V}$, $\Delta p$ berechnet und aufaddiert. Auf diese Weise wird der Matrize $M_1$ eine Fehlersumme $\Sigma F_1$ zugeordnet. Für die anderen Matrizen $M_i$ wird ebenso eine Fehlersumme $\Sigma F_i$ berechnet und zugeordnet. Es existieren dann:

$M_1$ mit $\Sigma F_1$
$M_2$ mit $\Sigma F_2$
$M_3$ mit $\Sigma F_3$
$M_4$ mit $\Sigma F_4$
$M_5$ mit $\Sigma F_5$

Im zweiten Schritt werden die Matrizen $M_i$ nach der Größe des Wertes ihrer Fehlersumme $\Sigma F_i$ sortiert:

- Die Matrize mit der größten Fehlersumme wird herausgenommen.
- Aus den anderen Matrizen $M_i$ wird eine neue Schwerpunktmatrize $M_S$ berechnet.

Angenommen, die Matrize $M_3$ habe mit $\Sigma F_3$ die größte Fehlersumme, dann würde die Schwerpunktmatrize $M_S$ wie folgt berechnet:

$$M_S = (M_1 + M_2 + M_4 + M_5) / 4$$

Danach wird eine Differenzmatrix $M_D$ von Schwerpunktmatrix $M_S$ und $M_3$ gebildet:

$$M_D = M_S - M_3$$

Mit der Schwerpunktmatrix $M_S$ und der Differenzmatrix $M_D$ werden gemäß dem NELDER-MEAD-Verfahren drei neue Matrizen gebildet, und zwar eine Extraktionsmatrix $M_E$, eine Reflexionsmatrix $M_R$ und eine Kontraktionsmatrix $M_K$. Es gilt:

$$M_E = M_S + \alpha \cdot M_D$$

$$M_R = M_S + M_D$$

$$M_K = M_S - \beta \cdot M_D$$

Dabei sind nach der Erfindung vorzugsweise $\alpha = 1{,}2$ und $\beta = 0{,}5$.

$$M_E = M_S + 1{,}2 \cdot M_D$$

$$M_R = M_S + M_D$$

$$M_K = M_S - 0{,}5 \cdot M_D$$

Für diese drei Matrizen werden, wie bei den anderen Matrizen, die Fehlersummen $\Sigma F_E$, $\Sigma F_R$ und $\Sigma F_K$ berechnet. Aus diesen drei Matrizen wird nun die Matrize mit der kleinsten Fehlersumme ermittelt. Ihre Werte werden zur Matrize $M_M$ und $\Sigma F_M$ geschrieben. Die Fehlersummen werden vergleichen, wobei folgende alternative Schritte möglich sind:
a) Ist die gefundene Fehlersumme $\Sigma F_M$ kleiner als die Fehlersumme $\Sigma F_3$ von $M_3$, dann werden die Werte von $M_M$ nach $M_3$ und von $\Sigma F_M$ nach $\Sigma F_3$ geschrieben, und es wird bei Schritt 2 - der Sortierung der Matrizen nach den Fehlersummen - fortgefahren.
b) Ist die Fehlersumme $\Sigma F_M$ hingegen größer als $\Sigma F_3$, dann wird der gemäß dem NELDER-MEAD-Verfahren ebenfalls vorgesehene Shrink-Prozess ausgelöst. Dazu wird die Matrize mit der kleinsten Fehlersumme ermittelt. Angenommen $M_2$ habe mit $\Sigma F_2$ die kleinste Fehlersumme. Dann berechnet der Algorithmus die anderen Matrizen mit Hilfe einer Zwischenmatrize $M_Z$ wie folgt neu; $M_Z$ wird dazu in jeder Zeile neu berechnet und in die nachfolgende Gleichung der Zeile eingesetzt.

$$
\begin{aligned}
M_Z &= M_2 - M_1 & M_1 &= M_2 + 0{,}5 \cdot M_Z \\
M_Z &= M_2 - M_3 & M_3 &= M_2 + 0{,}5 \cdot M_Z \\
M_Z &= M_2 - M_4 & M_4 &= M_2 + 0{,}5 \cdot M_Z \\
M_Z &= M_2 - M_5 & M_5 &= M_2 + 0{,}5 \cdot M_Z
\end{aligned}
$$

Es werden sozusagen die Matrizen $M_1$, $M_3$, $M_4$ und $M_5$ hin zur Matrize $M_2$ mit der kleinsten Fehlersumme $\Sigma F_2$ verstellt. Der von den Matrizen aufgespannte Raum schrumpft. Zu den Matrizen $M_1$, $M_3$, $M_4$ und $M_5$ werden die Fehlersummen

$\Sigma F_1$, $\Sigma F_3$, $\Sigma F4$ und $\Sigma F_5$, berechnet und dann mit Schritt 2 fortgefahren.

Sobald die Fehlersumme $\Sigma F_M$ einen vorgegebenen Toleranzwert unterschreitet, wird die Iteration beendet. Die Werte der Elemente der Matrize $M_M$ entsprechen dann den Werten für $\zeta_1$, $\zeta_2$, $\zeta_3$, $K_{VS1}$ und $K_{VS2}$.

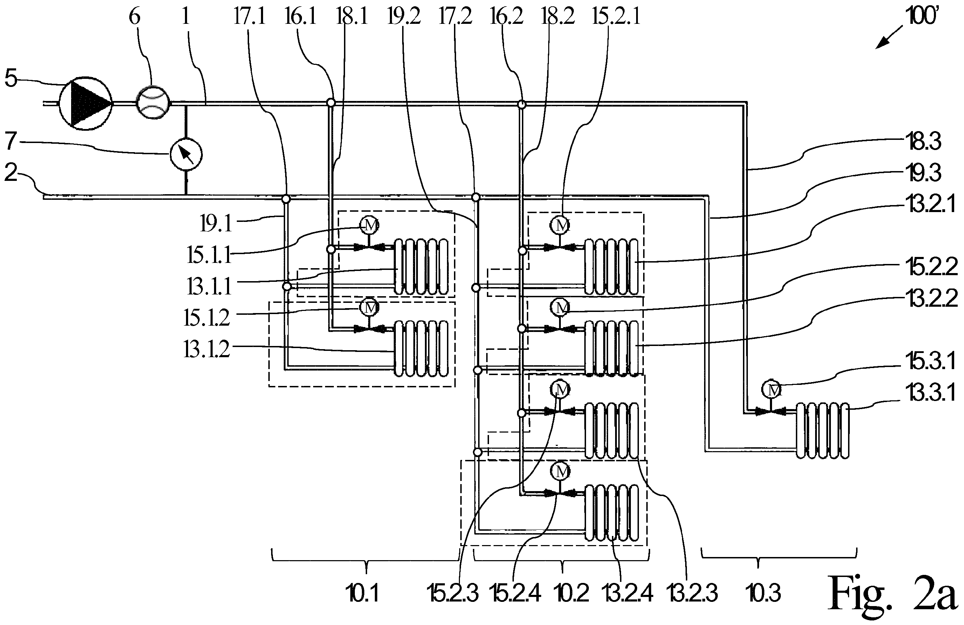

Figur 2a zeigt ein komplexeres System einer Heizungsanlage 100'. Auch hier sind ein Wärmeerzeuger und eine Steuerungseinrichtung (nicht dargestellt), eine Vorlaufleitung 1, eine Rücklaufleitung 2, eine Umwälzpumpe 5, ein Volumenstrommessgerät 6 und ein Differenzdrucksensor 7 vorgesehen.

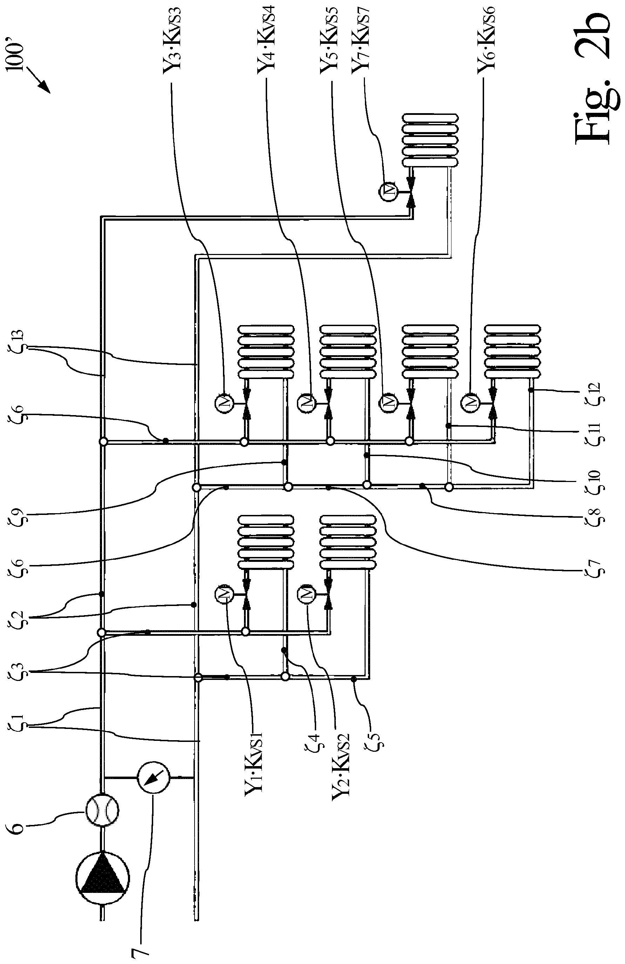

An Verzweigungsstellen 16.1, 16.2 in der Vorlaufleitung 1 beziehungsweise Vereinigungsstellen 17.1, 17.2 in der Rücklaufleitung 2 setzen Nebenvor- und Rücklaufleitungen 18.1, 18.2 19.1 19.2 für insgesamt drei Kreislaufstränge 10.1, 10.2, 10.3 an, die in Figur 2 schematisch in einer Spaltenanordnung dargestellt sind. In jedem der Kreislaufstränge 10.1, 10.2, 10.3 ist pro Wärmetauscherelement, insbesondere pro Heizkörper 13.1.1, 13.1.2, 13.2.1, 13.2.2, 13.2.3, 13.2.4, 13.3.1, mindestens je ein Masche ausgebildet. Die Maschen sind jeweils mit gestrichelten Linien markiert. Jede der Maschen weist eine Nebenvorlaufleitung und eine Nebenrücklaufleitung sowie ein motorisch angetriebenes und fernbetätigbares Stellventil 15.1.1, 15.1.2, 15.2.1, ..., 15.2.4, 15.3.1 auf.

Jedes Paar von Nebenvor- und Rücklaufleitungen, das zu einer Masche gehört und den gleichen Volumenstrom aufweist, repräsentiert eine hydraulische Komponente, der eine Variable $\zeta_4$, $\zeta_4$, $\zeta_9$ ... $\zeta_{10}$, $\zeta_{13}$ (siehe Figur 2b) in dem oben beschriebenen mathematischen Lösungsverfahren zugewiesen wird, welche den jeweiligen Druckverlustbeiwert in dem Leitungsabschnitt repräsentiert. Außerdem wird dem Basiskreislauf mit der Umwälzpumpe 5 und den Sensoren 6, 7, sowie jedem Rohrleitungsabschnitt zwischen benachbarten Verzweigungsstellen 16.1, 16.2, 17.1, 17.2 in den Vor- und Rücklaufleitungen 1, 2 und zwischen den Unterverzweigungen in den einzelnen Heizungssträngen je eine weitere Variable $\zeta_1$, $\zeta_2$, $\zeta_3$, $\zeta_6$, $\zeta_7$, $\zeta_8$ zugeordnet.

In dem in Figur 2b dargestellten Ausführungsbeispiel einer Heizungsanlage 100' existieren somit 13 einzeln zu berücksichtigende Maschen beziehungsweise sonstige Rohrleitungsabschnitte zwischen Verzweigungs- und Vereinigungsstellen. Zudem sind sieben Stellventile 15.1.1, ..., 15.3.1 mit insgesamt sieben Ventilkennwerten $K_{VSi}$ zu berücksichtigen, sodass ein System gebildet wird, welches 20 Variablen pro Vektor beziehungsweise pro eindimensionaler Matrize enthält und bei dem 20 gleichartig aufgebaute, aber mit unterschiedlichen Startwerten geladene Vektoren als Anfangswerte gewählt werden.

**Patentansprüche**

1. Verfahren zum Betreiben eines Gebäudeklimatisierungssystems (100; 100') mit einer Vielzahl von Wärmetauschern (13.1, 13.2; 13.1.1, ..., 13.3.1) in einem hydraulisch dynamisch abgeglichenen Zustand, wobei in dem Gebäudeklimatisierungssystems (100; 100'):

   - in einem Basiskreislauf mit Vorlauf- und Rücklaufleitungen (1, 2) wenigstens ein Wärmetauscher und/oder ein Wärmeerzeuger (3) sowie wenigstens eine Umwälzpumpe (5) angeordnet sind,
   - wenigstens zwei Kreislaufstränge (10.1', 10.2', 10.3') in Parallelschaltung an Verzweigungsstellen (16, 17; 16.1, 16.2, 17.1, 17.2) an die Vorlaufbeziehungsweise Rücklaufleitungen (1, 2) angeschlossen sind,
   - jeder Kreislaufstrang (10.1', 10.2', 10.3') wenigstens eine Masche (11.1, 11.2) mit wenigstens einem Wärmetauscher (13.1, 13.2; 13.1.1, ..., 13.3.1), eine Nebenvorlauf- und -rücklaufleitung (18.1, ..., 18.3, 19.1, ..., 19.3), und wenigstens ein fernbetätigbares Stellventil (15.1, 15.2; 15.1.1, ..., 15.3.1) umfasst, das über eine kabellose oder kabelgebundene Datenverbindung (14.1, 14.2) mit einer Steuerungseinheit (4) verbunden ist; **dadurch gekennzeichnet, dass** während des Betriebs des Gebäudeklimatisierungssystems:
   - ein Differenzdruck $\Delta p$ zwischen der Vorlaufleitung (1) und der Rücklaufleitung (2) und ein Ist-Volumenstrom V in der Vorlaufleitung (1) gemessen wird;
   - die Ventilstellwerte ($Y_1$, ..., $Y_{13}$) der Stellventile (15.1, 15.2; 15.1.1, ..., 15.3.1) einzeln und fortwährend derart berechnet und eingestellt werden, dass sich ein zur Bereitstellung der benötigten Wärme geeigneter Teilvolumenstrom in der Masche einstellt,
   - die Ersatzwiderstände $K_{VSi}$ der Stellventile (15.1, 15.2; 15.1.1, ..., 15.1.3) und die Druckverlustbeiwerte $\zeta_i$ jeweils als Variable definiert und berechnet werden für:

      - den Basiskreislauf mit Vorlauf- und Rücklaufleitungen (1, 2),
      - jede Masche (11.1, 11.2) und
      - jeden weiteren Abschnitt in den Vorlauf- und Rücklaufleitungen (1, 2) und in den Nebenvorlauf- und -rücklaufleitungen (18.1, ..., 18.3, 19.1, ..., 19.3) zwischen Verzweigungsstellen (16, 17; 16.1, 16.2, 17.1, 17.2), wobei zusammengehörigen Abschnitten in den (Neben-) Vor- und Rücklaufleitungen (18.1, ..., 18.3, 12.1, ..., 12.3) in denen der gleiche Volumenstrom herrscht, derselbe Druckverlustbeiwert $\zeta_i$ zugewiesen wird;

dass mit den Ersatzwiderständen $K_{VSi}$ und den Druckverlustbeiwerten $\zeta_i$ die Teilvolumenströme durch eine lineare Regression nach dem iterativen Verfahren von NELDER-MEAD berechnet und in der Steuerungseinheit (4) gespeichert werden, wobei

- mit den Variablen $\zeta_i$, $K_{VSi}$ eine Anzahl von n Matrizen $M_i$ mit n Spalten gebildet wird, wobei n der Anzahl aller unbekannten Druckverlustbeiwerte $\zeta_i$ und hydraulischen Ersatzwiderstände $K_{VSi}$ entspricht;
- der gemessene Ist-Volumenstrom V und der gemessene Differenzdruck $\Delta$p zur Fehlerberechnung verwendet werden.

2. Verfahren nach Anspruch 1, **dadurch gekennzeichnet, dass** die Fehlerberechnung in dem iterativen Verfahren wie folgt vorgenommen wird:

- mit den in den Matrizen $M_i$ geladenen Werten, den Ventilstellwerten $Y_i$ und dem gemessenen Differenzdruck $\Delta$p wird ein Schein-Volumenstrom $\dot{V}'$ berechnet;
- es wird für jede Matrize $M_i$ ein Fehler als Differenz zwischen dem Ist-Volumenstrom $\dot{V}$ und dem Schein-Volumenstrom $\dot{V}'$ bestimmt;
- wenigstens ein Ventilstellwert $Y_i$ eines Stellventils (15.1, 15.2; 15.1.1, ..., 15.1.3) wird durch die Steuerungseinheit (4) verändert und die Messungen und Volumenstromberechnungen werden wiederholt;
- die Anzahl der Fehlerberechnungen zur Bildung einer der Matrize $M_i$ zuzuordnenden Fehlersumme $F_i$ beträgt in jedem Iterationsschritt mindestens n+1.

3. Verfahren nach Anspruch 1 oder 2, **dadurch gekennzeichnet, dass** zur erstmaligen Durchführung des hydraulischen Abgleichs in dem Gebäudeklimatisierungssystem (100; 100') die Startbedingungen des Verfahrens von NELDER-MEAD wie folgt gewählt werden:

- Die Stellventile (15.1, 15.2; 15.1.1, ..., 15.1.3) werden durch die Steuerungseinheit (4) jeweils auf einen spezifischen Ventilstellwert $Y_i$ von 70% bis 100% eingestellt;
- Die Matrizen $M_n$ werden unter Vermeidung linearer Abhängigkeiten willkürlich mit Anfangswerten für die Druckverlustbeiwerte $\zeta_{i,j}$ und/oder die Ersatzwiderstände $K_{VSi,j}$ geladen;

4. Verfahren nach einem der Ansprüche 1 bis 3, **dadurch gekennzeichnet, dass** die am schlechtesten angebundene Masche ermittelt wird, deren Ventil zur Erreichung des Soll-Volumenstroms am weitesten geöffnet werden muss, und dass dem Stellventil (15.1, 15.2; 15.1.1, ..., 15.3.1) in dieser Masche ein Ventilstellwert $Y_{max}$ von >90% zugewiesen wird.

5. Verfahren nach Anspruch 4, **dadurch gekennzeichnet, dass** jeweils ein oberer Grenzwert für die Ventilstellwerte $Y_i$ aller anderen Stellventile (15.1, 15.2; 15.1.1, ..., 15.1.3) in den übrigen Maschen ermittelt und in der Steuerungseinheit (4) gespeichert wird.

6. Verfahren nach einem der Ansprüche 1 bis 5, **dadurch gekennzeichnet, dass** wenigstens ein Kreislaufstrang (10.1', 10.2', 10.3') mehrere parallele Maschen aufweist, wobei jede Masche eine Maschenvorlaufleitung und eine Maschenrücklaufleitung aufweist, zwischen welchen in Reihe jeweils wenigstens ein Wärmetauscher (13.1, 13.2; 13.1.1, ..., 13.3.1) und wenigstens ein fernbetätigbares Stellventil (15.1, 15.2; 15.1.1, ..., 15.3.1) angeordnet sind.

7. Verfahren nach einem der Ansprüche 1 bis 6, **dadurch gekennzeichnet, dass** wenigstens ein Wärmetauscher ein Radiator-Heizkörper (13.1, 13.2; 13.1.1, ..., 13.3.1) ist.

8. Verfahren nach einem der Ansprüche 1 bis 6, **dadurch gekennzeichnet, dass** wenigstens ein Wärmetauscher ein Deckenklimatisierungselement ist.

9. Verfahren nach einem der Ansprüche 1 bis 8, **dadurch gekennzeichnet, dass** das Gebäudeklimatisierungssystem (100; 100') im Heizbetrieb betrieben wird.

10. Verfahren nach einem der Ansprüche 1 bis 8, **dadurch gekennzeichnet, dass** das Gebäudeklimatisierungssystem (100; 100') im Kühlbetrieb betrieben wird.

**Claims**

1. Method for operating a building air-conditioning system (100; 100') with a plurality of heat exchangers (13.1, 13.2; 13.1.1, ..., 13.3.31) in a dynamically hydraulically compensated state, in which, in the building air-conditioning system (100; 100'):

   - at least one heat exchanger and/or one heat generator (3) and at least one circulating pump (5) are arranged in a base circuit with advance and return lines (1, 2),
   - at least two circuit strands (10.1', 10.2', 10.3') are connected to the advance and return lines (1, 2) in parallel at branch points (16, 17; 16.1, 16.2, 17.1, 17.2),
   - each circuit strand (10.1', 10.2', 10.3') comprises at least one loop (11.1, 11.2) having at least one heat exchanger (13.1, 13.2; 13.1.1, ..., 13.3.1), an auxiliary advance and return line (18.1, ..., 18.3, 19.1, ..., 19.3), and at least one remotely actuable control valve (15.1, 15.2; 15.1.1, ..., 15.3.1), which is connected to a control unit (4) via a wired or wireless datalink (14.1, 14.2); **characterised in that**, during operation of the building air-conditioning system:
   - a differential pressure $\Delta p$ between the advance line (1) and the return line (2) and an actual volume flow rate $\dot{V}$ in the advance line (1) is measured;
   - the valve setpoint values ($Y_1$, ..., $Y_{13}$) of the control valves (15.1, 15.2; 15.1.1, ..., 15.3.1) are calculated and adjusted individually and continuously in such a way that a volume sub-flow suitable for providing the required heat is initiated in the loop,
   - the substitute resistors $K_{VSi}$ of the control valves (15.1, 15.2; 15.1.1, ..., 15.1.3) and the pressure loss coefficients $\zeta_i$ are each defined as a variable and calculated for:

     ∘ the base circuit with advance and return lines (1, 2),
     ∘ each loop (11.1, 11.2), and
     ∘ each further portion in the advance and return lines (1, 2) and in the auxiliary advance and return lines (18.1, ..., 18.3, 19.1, ..., 19.3) between branch points (16, 17; 16.1, 16.2, 17.1, 17.2), associated portions in the (auxiliary) advance and return lines (18.1, ..., 18.3, 12.1, ..., 12.3) in which the same volume flow rate prevails being assigned the same pressure loss coefficient $\zeta_i$;

   **in that** by way of the substitute resistors $K_{VSi}$ and the pressure loss coefficients $\zeta_i$ the volume sub-flows are calculated by linear regression by the NELDER-MEAD iterative method and stored in the control unit (4),

   - a number n of matrices $M_i$ with n columns being formed using the variables $\zeta_i$, $K_{VSi}$, where n is the number of all unknown pressure loss coefficients $\zeta_i$ and hydraulic substitute resistors $K_{VSi}$;
   - the measured actual volume flow rate $\dot{V}$ and the measured differential pressure $\Delta p$ being used for error calculation.

2. Method according to claim 1, **characterised in that** the error calculation is performed by the iterative method as follows:

   - an apparent volume flow rate $\dot{V}'$ is calculated by way of the values stored in the matrices $M_i$, the valve setpoint values $Y_i$ and the measured differential pressure $\Delta p$;
   - for each matrix $M_i$ an error is determined as the difference between the actual volume flow rate $\dot{V}$ and the apparent volume flow rate $\dot{V}'$;
   - at least one valve setpoint value $Y_i$ of a control valve (15.1, 15.2; 15.1.1, ..., 15.1.3) is altered by the control unit (4), and the measurements and volume flow rate calculations are repeated;
   - the number of error calculations for forming an error total $F_i$ to be assigned to the matrix $M_i$ is at least n+1 in each iteration step.

3. Method according to either claim 1 or claim 2, **characterised in that**, for performing the hydraulic compensation in the building air-conditioning system (100; 100') for the first time, the initial conditions of the NELDER-MEAD method are selected as follows:

   - the control valves (15.1, 15.2; 15.1.1, ..., 15.1.3) are each set by the control unit (4) to a specific valve setpoint value $Y_i$ from 70 % to 100 %;
   - the matrices $M_n$ are loaded arbitrarily, while avoiding linear dependencies, with starting values for the pressure loss coefficients $\zeta_{i,j}$ and/or the substitute resistors $K_{VSi,j}$.

**4.** Method according to any of claims 1 to 3, **characterised in that** the worst-connected loop is determined, of which the valve has to be opened widest to achieve the target volume flow rate, and **in that** the control valve (15.1, 15.2; 15.1.1, ..., 15.3.1) in this loop is assigned a valve setpoint value $Y_{max}$ of > 90 %.

**5.** Method according to claim 4, **characterised in that** in each case an upper bound for the valve setpoint value of all other control valves (15.1, 15.2; 15.1.1, ..., 15.1.3) in the remaining loops is determined and stored in the control unit (4).

**6.** Method according to any of claims 1 to 5, **characterised in that** at least one circuit strand (10.1', 10.2', 10.3') has a plurality of parallel loops, each loop having a loop advance line and a loop return line, between which at least one heat exchanger (13.1, 13.2; 13.1.1, ..., 13.3.1) and at least one remotely actuable control valve (15.1, 15.2; 15.1.1, ..., 15.3.1) are arranged in series in each case.

**7.** Method according to any of claims 1 to 6, **characterised in that** at least one heat exchanger is a radiator heating element (13.1, 13.2; 13.1.1, ..., 13.3.1).

**8.** Method according to any of claims 1 to 6, **characterised in that** at least one heat exchanger is a ceiling air-conditioning element.

**9.** Method according to any of claims 1 to 8, **characterised in that** the building air-conditioning system (100; 100') is operated in heating operation.

**10.** Method according to any of claims 1 to 8, **characterised in that** the building air-conditioning system (100; 100') is operated in cooling operation.

**Revendications**

**1.** Procédé pour faire fonctionner un système de climatisation de bâtiment (100 ; 100') comportant une pluralité d'échangeurs de chaleur (13.1, 13.2 ; 13.1.1, ..., 13.3.1) dans un état d'équilibre hydraulique dynamique, dans lequel, dans le système de climatisation de bâtiment (100 ; 100') :

- au moins un échangeur de chaleur et/ou un générateur de chaleur (3) ainsi qu'au moins une pompe de circulation (5) sont disposés dans un circuit de base avec des conduites d'aller et de retour (1, 2),
- au moins deux branches de circuit (10.1', 10.2', 10.3') sont raccordées en parallèle à des points de ramification (16, 17; 16.1, 16.2, 17.1, 17.2) respectivement sur les conduites d'aller et de retour (1, 2),
- chaque branche de circuit (10.1', 10.2', 10.3') comprend au moins une maille (11.1, 11.2) avec au moins un échangeur de chaleur (13.1, 13.2 ; 13.1.1, ..., 13.3.1), une conduite secondaire d'aller et de retour (18.1, ..., 18.3, 19.1, ..., 19.3), et au moins une vanne de réglage actionnable à distance (15.1, 15.2 ; 15.1.1, ..., 15.3.1) qui est relié à une unité de commande (4) par une liaison de données sans fil ou par câble (14.1, 14.2) ;

**caractérisé en ce que** pendant le fonctionnement du système de climatisation de bâtiment :

- on mesure une pression différentielle $\Delta$p entre la conduite d'aller (1) et la conduite de retour (2) et un débit volumique réel $\dot{V}$ dans la conduite d'aller (1) ;
- les valeurs de réglage de vanne ($Y_1$, ..., $Y_{13}$) des vannes de réglage (15.1, 15.2 ; 15.1.1, ..., 15.3.1) sont calculées et réglées individuellement et en continu de telle sorte qu'il s'établisse dans la maille un débit volumique partiel adapté à la fourniture de la chaleur nécessaire,
- les résistances équivalentes $K_{VSi}$ des vannes de réglage (15.1, 15.2 ; 15.1.1, ..., 15.1.3) et les coefficients de perte de charge $\zeta_i$ sont chaque fois définis et calculés comme des variables pour :

  ◦ le circuit de base avec les conduites d'aller et de retour (1, 2),
  ◦ chaque maille (11.1, 11.2) et
  ◦ chaque section supplémentaire dans les conduites d'aller et de retour (1, 2) et dans les conduites secondaires d'aller et de retour (18.1, ..., 18.3, 19.1, 19.3) entre des points de ramification (16, 17 ; 16.1, 16.2, 17.1, 17.2), le même coefficient de perte de charge $\zeta_i$ étant attribué aux sections mutuellement associées dans les conduites (secondaires) d'aller et de retour (18.1, ..., 18.3, 12.1, ..., 12.3) dans lesquelles prévaut le même débit volumétrique ;

que les flux volumiques partiels sont calculés avec les résistances équivalentes $K_{VSi}$ et les coefficients de perte de charge $\zeta_i$ par une régression linéaire selon le procédé itératif de NELDER-MEAD et stockés dans l'unité de commande (4), dans lequel

- un nombre de n matrices $M_i$ à n colonnes est formé avec les variables $\zeta_i$, $K_{VSi}$, n correspondant au nombre de tous les coefficients de perte de charge $\zeta_i$ et résistances hydrauliques équivalentes $K_{VSi}$ inconnus ;
- le débit volumique réel mesuré $\dot{V}$ et la pression différentielle mesurée $\Delta p$ sont utilisés pour le calcul d'erreur.

2. Procédé selon la revendication 1, **caractérisé en ce que** le calcul d'erreur est effectué selon le procédé itératif comme suit :

- un débit volumétrique apparent $\dot{V}'$ est calculé à partir des valeurs chargées dans les matrices $M_i$, des valeurs de réglage de vanne $Y_i$ et de la pression différentielle mesurée $\Delta p$ ;
- une erreur est déterminée pour chaque matrice $M_i$ comme une différence entre le débit volumétrique réel $\dot{V}$ et le débit volumétrique apparent $\dot{V}'$;
- au moins une valeur de réglage de vanne $Y_i$ d'une vanne de réglage (15.1, 15.2 ; 15.1.1, ..., 15.1.3) est modifiée par l'unité de commande (4) et les mesures et calculs de débit volumique sont répétés ;
- le nombre de calculs d'erreur pour former une somme d'erreurs $F_i$ à associer à la matrice $M_i$ est au moins égal à n+1 à chaque étape d'itération.

3. Procédé selon la revendication 1 ou 2, **caractérisé en ce que**, pour la première exécution de l'équilibrage hydraulique dans le système de climatisation de bâtiment (100 ; 100'), les conditions de départ du procédé de NELDER-MEAD sont choisies comme suit :

- les vannes de réglage (15.1, 15.2 ; 15.1.1, ..., 15.1.3) sont chacune réglées par l'unité de commande (4) à une valeur de réglage de vanne $Y_i$ de 70 % à 100 % ;
- les matrices $M_n$ sont chargées arbitrairement avec des valeurs initiales pour les coefficients de perte de charge $\zeta_{i,j}$ et/ou les résistances équivalentes $K_{VSi,j}$ en évitant les dépendances linéaires.

4. Procédé selon l'une des revendications 1 à 3, **caractérisé en ce que** l'on détermine la maille la plus mal raccordée, dont la vanne doit être ouverte le plus largement pour obtenir le débit volumétrique de consigne, et que l'on attribue à la vanne de réglage (15.1, 15.2 ; 15.1.1, ..., 15.3.1) dans cette maille une valeur de réglage de vanne $Y_{max} > 90 \%$.

5. Procédé selon la revendication 4, **caractérisé en ce que** l'on détermine une valeur limite supérieure respective pour les valeurs de réglage de vanne $Y_i$ de toutes les autres vannes de réglage (15.1, 15.2 ; 15.1.1, ..., 15.1.3) dans les mailles restantes et que celles-ci sont stockées dans l'unité de commande (4).

6. Procédé selon l'une des revendications 1 à 5, **caractérisé en ce qu'**au moins une branche de circuit (10.1', 10.2', 10. 3') présente plusieurs mailles parallèles, chaque maille présentant une conduite d'aller de maille et une conduite de retour de maille, entre lesquelles sont disposés en série chaque fois au moins un échangeur de chaleur (13.1, 13.2 ; 13.1.1, ..., 13.3.1) et au moins une vanne de réglage actionnable à distance (15.1, 15.2 ; 15.1.1, ..., 15.3.1).

7. Procédé selon l'une des revendications 1 à 6, **caractérisé en ce qu'**au moins un échangeur de chaleur est un radiateur de chauffage (13.1, 13.2 ; 13.1.1, ..., 13.3.1).

8. Procédé selon l'une des revendications 1 à 6, **caractérisé en ce qu'**au moins un échangeur de chaleur est un élément de climatisation de plafond.

9. Procédé selon l'une des revendications 1 à 8, **caractérisé en ce que** le système de climatisation de bâtiment (100 ; 100') fonctionne en mode chauffage.

10. Procédé selon l'une des revendications 1 à 8, **caractérisé en ce que** le système de climatisation de bâtiment (100 ; 100') fonctionne en mode refroidissement.

Fig. 1a

Fig. 1a

EP 3 372 905 B1

Fig. 1b

EP 3 372 905 B1

Fig. 2a

EP 3 372 905 B1

Fig. 2b

$Y_1 \cdot K_{VS1}$

$Y_2 \cdot K_{VS2}$

$Y_3 \cdot K_{VS3}$

$Y_4 \cdot K_{VS4}$

$Y_5 \cdot K_{VS5}$

$Y_7 \cdot K_{VS7}$

$Y_6 \cdot K_{VS6}$

$\zeta_1$  $\zeta_3$  $\zeta_2$  $\zeta_6$  $\zeta_9$  $\zeta_6$  $\zeta_{13}$

$\zeta_4$

$\zeta_5$

$\zeta_7$  $\zeta_8$  $\zeta_{10}$  $\zeta_{11}$  $\zeta_{12}$

100'

EP 3 372 905 B1

**EP 3 372 905 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014016791 A1
- DE 102010022763 A1

- DE 102012018778 B4